Europäisches Patentamt

European Patent Office

Office européen des brevets

(11) Publication number: **0 107 232**

**B1**

(12) EUROPEAN PATENT SPECIFICATION

(45) Date of publication of patent specification: **11.05.88**

(21) Application number: **83201430.2**

(22) Date of filing: **06.10.83**

(51) Int. Cl.⁴: **H 01 Q 1/18,** G 01 C 21/18, G 01 D 1/08

(54) Stabilisation aid for a vehicle- or vessel-borne search unit.

(30) Priority: **19.10.82 NL 8204027**

(43) Date of publication of application:
**02.05.84 Bulletin 84/18**

(45) Publication of the grant of the patent:
**11.05.88 Bulletin 88/19**

(84) Designated Contracting States:
**BE CH DE FR GB IT LI NL SE**

(56) References cited:
**US-A-3 358 285**
**US-A-4 143 312**

**ADVANCES IN INSTRUMENTATION, vol. 24, part 3, Proceedings of the 24th Annual ISA Conference, Houston, 27th-30th October 1969, pages 69-631.1 - 69-631.10, Pittsburgh, USA P.TOKAREFF Jr.: "Effectiveness of feedforward stabilization"**

**The file contains technical information submitted after the application was filed and not included in this specification**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **Hofman, Jan**
**Haarboerhorst 21**
**NL-7531 LJ Enschede (NL)**

Courier Press, Leamington Spa, England.

**Description**

The invention relates to a stabilisation aid for a vehicle- or vessel-borne search unit. It is usual to mount such a unit on a platform on board the vehicle or vessel and to stabilise this platform with respect to the horizontal plane. Certainly if, apart from the search unit, a tracking unit and opto-electronic observation means, if not already included in the search and tracking units, are mounted on the stabilised platform, this results in a heavy stabilisation system through the added weight and weight distribution. In the U.S. patent specification 3,358,285 this disadvantage is obviated by suspending the platform in a stabilised frame inside a radome, installing the tracking unit above the platform and the search unit below the platform. Such a system has however the disadvantages that no opto-electronic observation means, not included in the search and tracking units, can be installed on the platform inside the randome, and that, certainly if the randome and hence the frame in which the platform is suspended perform a strongly rolling motion, the view of the search unit is obstructed, giving rise to blind spots during the search process. The present invention has for its object to provide, therefore, a completely different method of stabilisation, whereby the above disadvantages are obviated.

According to the invention, the stabilisation aid is as set forth in claim 1. The observation means of the search unit is therefore stabilised separately. For the observation means, a radar antenna system or a television or infrared camera can be used. The servo-mechanisms are of such a design that a search motion is obtainable in an earth-fixed horizontal or earth-fixed inclined plane, as well as in an inclined plane rotating about an earth-fixed axis.

The invention will now be described more fully with reference to the accompanying figures, of which:

Figure 1 is a schematic illustration of the various axes connected with the stabilisation and the plane of stabilisation, in which the search motion is performed; and

Figure 2 is a block diagram of the stabilisation aid according to the invention.

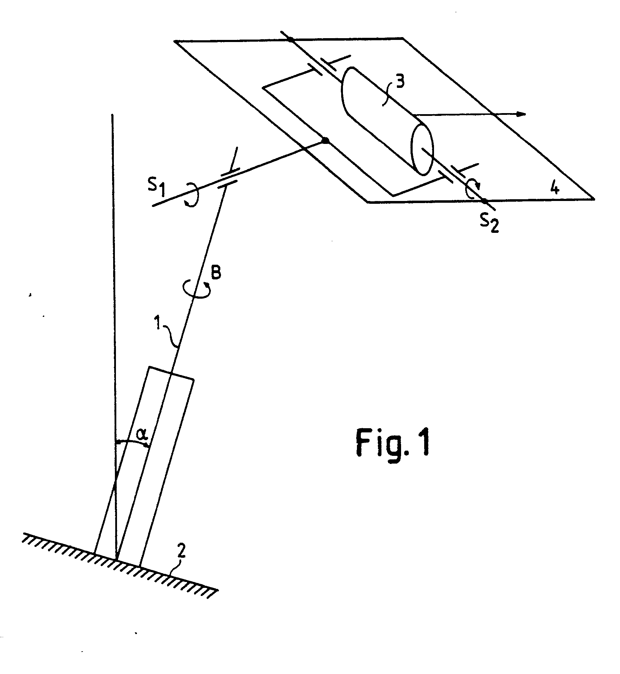

In Figure 1 the search axis of the search unit is designated by the numeral 1. The search unit is mounted on a platform 2; this platform is constituted either directly by a vehicle or vessel, or by a rotatable, vehicle- or vessel-borne support, but swinging with the vehicle or vessel. The instantaneous angle of inclination of platform 2 with respect to an earth-fixed reference axis, e.g. the vertical, is designated by $a$. On the part of the search unit rotating about search axis 1 are two mutually perpendicular axes $S_1$ and $S_2$, about which the observation part 3 of the search unit is rotable and stabilised. The observation part 3 of the search unit performs its search motion in a plane 4. The stabilisation of observation part 3 is to the effect that the orientation of plane 4 is kept earth-fixed.

In case the search unit rotates on an inclined platform, a non-uniformity arises in the search motion. This non-uniformity causes a disturbing torque acting about axes $S_1$ and $S_2$.

Assuming that the rotational velocity $\omega = \dot{B}$ of the observation part about axis 1 is constant and the plane 4 is normal to the vertical, the disturbing torque about axis $S_1$ may be expressed by the relationship:

$$M_s = \tfrac{1}{2} J\omega^2 \cdot \frac{\sin^3 a \cdot \cos a}{(1 - \cos^2 \omega t \cdot \sin^2 a)^2} \cdot (\sin \omega t + \sin 3\omega t),$$

where J is the moment of inertia of the stabilised part of the search unit, i.e. of the observation part with suspension, about the stabilisation axis concerned. The disturbing torque therefore comprises two frequency components. Apart from this disturbing torque arising through the non-uniformity in the search motion, other disturbing torques occur. The latter torques are however of a smaller magnitude, and include frictional torques, gyroscopic torques, due to the rolling rate of the platform, and wind torques.

All of these disturbing torques are a first cause of control errors in the servomechanisms. A second cause of such control errors lies in the rotational velocity of each of the stators with respect to the rotors of the servomechanism motors on axes $S_1$ and $S_2$. Since the orientation of plane 4 and therewith the above rotors are kept earth-fixed, the stators rotate about the respective rotors during the rotation of observation part 3 about the inclined rotation axis 1. So the disturbing angular velocity component $\dot{\varphi}_s$ of the stators introduced by this rotation in the servomechanism at axis $S_1$ may be expressed by the relationship:

$$\dot{\varphi}_s = \omega \cdot \frac{\sin a \cdot \cos a}{(1 - \cos^2 \omega t \cdot \sin^2 a)} \cdot \cos \omega t.$$

The effect of the control errors produced by $M_s$ and $\dot{\varphi}_s$ is that, although corrected for a defined earth-fixed, usually horizontal orientation, the plane 4 still assumes a position deviating from this orientation. Through the implementation of certain compensation methods however, it is possible to reduce the effect of the control errors drastically; notably the effect of the $\omega$-component of $M_s$ and $\dot{\varphi}_s$ can be counteracted by applying feedforward control, dependent upon the $a$ and $\dot{B}$ values, in the servo-mechanisms. With this control the plane is forced to stabilise in a position deviating from the desired orientation in such a way that, through the occurrence of the above disturbances, still a stabilisation in the desired plane is realised. This compensation requires no additional motor torque, provided a direct driving motor is used. Compensation of the control errors caused by the 3ω-component of $M_s$ however requires an additional motor torque, as well as rather extensive calculations. Because the control errors caused by the 3ω-component are in practice of limited magnitude, they normally need not be compensated.

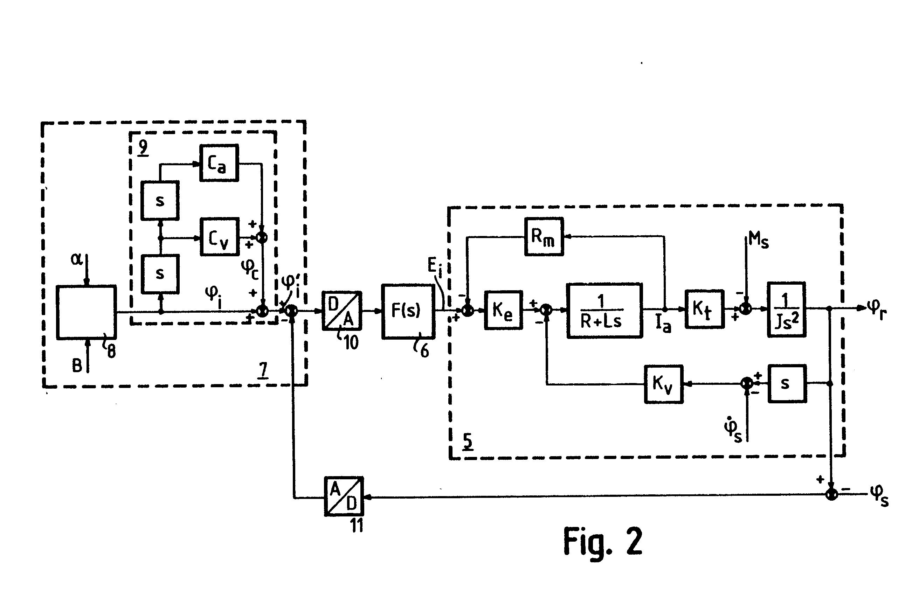

The block diagram of Figure 2 illustrates the servo-mechanism for one of the stabilisation axes together with a feasible embodiment of the control error compensation means. The servo-mechanism is constituted by a position feedback combination of at least a servo amplifier and motor. This combination with a direct coupled load is designated by the numeral 5. The combination of servo amplifier and motor is depicted functionally only to be able to determine the transfer function. Apart from the control voltage $E_i$, the sum of the disturbing torques acts on the combination; of these torques, only the non-uniformity torque $M_s$ is taken into consideration. Further the stator rotation disturbance component $\dot{\phi}_s$, producing an electric counter-voltage, acts on the motor drive. In the embodiment in question the servo amplifier comprises a current feedback circuit. The relationship between inputs $E_i$, $M_s$ and $\dot{\phi}_s$ on the one side and output $\phi_r$ of the servo amplifier—loaded motor combination on the other may be expressed by:

$$\phi_r = \frac{K_e E_i - \dfrac{R}{K_t}\left(1+\dfrac{R_m K_e}{R}\right)\left[1+\dfrac{s\tau_e}{\left(1+\dfrac{R_m K_e}{R}\right)}\right]M_s + K_v\dot{\phi}_s}{K_v s\left[1+\left(1+\dfrac{R_m K_e}{R}\right)s\tau_m\right]\left[1+\dfrac{s\tau_e}{\left(1+\dfrac{R_m K_e}{R}\right)}\right]}$$

where $K_e$ is the forward gain of the servo amplifier, $K_t$ the motor torque constant, $R_m$ the current feedback constant, $R$ the motor armature resistance, $L$ the self-induction of the motor, $K_v$ the counter-voltage constant,

$$\tau_m = \frac{RJ}{K_v K_t}$$

the mechanical time constant, and

$$\tau_e = \frac{L}{R}$$

the electrical time constant, while $\tau_e \ll \tau_m$.

In a position feedback circuit, whose input signal is represented by $\phi_i'$ and where the angular difference between rotor and stator is fed back to the input, the relationship between $\phi_i'$, $M_s$ and $\dot{\phi}_s$ on the one side and $\phi_r$ on the other is expressed by:

$$\phi_r = \frac{(\phi_i'+\phi_s)K_e F(s) - \dfrac{R_m K_e}{K_t}\left(1+\dfrac{R}{R_m K_e}s\tau_e\right)M_s + K_v\dot{\phi}_s}{K_e F(s)+K_v s\left(1+\dfrac{R_m K_e}{R}s\tau_m\right)\left(1+\dfrac{R}{R_m K_e}s\tau_e\right)}$$

where $F(s)$ is the transfer function of the filter 6 in the feed-forward circuit, while

$$\frac{R_m K_e}{R} \gg 1.$$

To keep the required motor torque low, but without the control errors reaching extremely high values, and to prevent mechanical resonances in the desired lightweight and hence relatively weak construction, a relatively narrow servo bandwidth near the frequency range of the $M_s$ and $\dot{\phi}_s$ disturbances is utilised in the embodiment in question. This frequency range, in which $F(s) \approx K \cdot s$, where K is a constant, lies amply within the frequency interval

$$\left( \frac{R}{R_mK_e} \cdot \frac{1}{\tau_m}, \quad \frac{R_mK_e}{R} \cdot \frac{1}{\tau_e} \right).$$

If further

$$\frac{R_mK_v\tau_m}{RK} = \frac{1}{\omega_0},$$

the relationship between $\varphi_i'$, $M_s$ and $\dot{\varphi}_s$ on the one side and $\varphi_r$ on the other may be approximated by

$$\varphi_r = \frac{1}{1+\dfrac{s}{\omega_0}} \left[ (\varphi_i'+\varphi_s) - \frac{1}{J\omega_0 s} \left( M_s - \frac{K_vK_t}{R_mK_e} \dot{\varphi}_s \right) \right]$$

With the rotation axis in the vertical position, $\varphi_i'+\varphi_s=0$, $M_s=0$ and $\dot{\varphi}_s=0$, so that $\varphi_r=0$. Plane 4 is stabilised at the desired (horizontal) position about the axis considered. With the rotation axis in an inclined position, the control error within the frequency range in question equals:

$$\Delta\varphi_r = \varphi_i'+\varphi_s-\varphi_r = \frac{1}{1+\dfrac{s}{\omega_0}} \left[ \frac{s}{\omega_0} (\varphi_i'+\varphi_s) + \frac{1}{J\omega_0 s} \left( M_s - \frac{K_vK_t}{R_mK_e} \dot{\varphi}_s \right) \right].$$

In order that plane 4 be stabilised at the desired value about the axis considered, the input signal $\varphi_i'$ of the servomechanism consists of a signal $\varphi_i$, representing the desired value at which the angular difference between rotor and stator of the axis concerned is controlled, and a compensation signal $\varphi_c$ for the control errors incurred. This compensation signal is dependent upon the inclined position $\alpha$ of the platform and position B of the rotation axis measured in the plane of the platform: $\varphi_c=F(\alpha,B)\approx\Delta\varphi_r$.

A computer 7 supplies the input signal $\varphi_i'$ of the servomechanism. This computer comprises a converter 8 and a feedforward circuit 9.

In converter 8 the $\varphi_i$ signal is obtained from the platform inclined position $\alpha$, measured with respect to an earth-fixed reference system, and position B of the rotation axis. The feedforward circuit 9 comprises a velocity feedforward depending upon the angular velocity $c_v \cdot \dot{\varphi}_i$. A more precise control error compensation is obtained by incorporating an acceleration feedforward depending upon the angular acceleration, $c_a \cdot \ddot{\varphi}_i$. In such a case, the compensation signal may be expressed by the relationship $\varphi_c=(c_v+c_as)s\varphi_i$, where $c_v$ and $c_a$ are dependent upon $\alpha$ and $\dot{B}$ or may be assumed constant if the values of $\alpha$ and the variations of $\dot{B}$ incurred in practice are slight. A correct determination of $c_v$ and $c_a$ in computer 7 permits the $\omega$-component in $\Delta\varphi_r$ to be compensated to a high extent; as already stated, the $3\omega$-component need not be compensated. Hence, from the established relationship between $\alpha$ and B on the one side and $\varphi_i$ on the other the computer calculates the instantaneous value $\varphi_c$ concerned with each instantaneous value of $\alpha$ and B. Instead of a velocity and acceleration feedforward, the computer is able to calculate each corrected value of $\varphi_i$ from a fixed mathematical relationship or an experimentally established relationship between $\alpha$ and B on the one side and $\varphi_c$ or $\Delta\varphi_r$ on the other. For this purpose the computer may comprise, say, a memory containing for a series of $\alpha$ and B values the corresponding values for $\varphi_c$.

Figure 2 further illustrates a digital-to-analogue converter 10 and an analogue-to-digital converter 11 to realise the connection between the computer and the particular servomechanism. It should also be noted that in the embodiment in question the servomechanism is of the electro-mechanical design; it is however also possible to utilise a hydraulic or pneumatic servo.

## Claims

1. Stabilisation aid for a vehicle- or vessel-borne search unit having a rotatable part mounted for rotation about a search axis (1) and observation means (3) mounted on said rotatable part, the stabilisation aid comprising a first and a second servomechanism arranged to stabilise the observation means (3) about two mutually perpendicular axes ($S_1$, $S_2$), characterised in that the two axes are fixed with reference to said rotatable part.

2. Stabilisation aid as claimed in claim 1, characterised in that, in order to obtain stabilisation about one of said two axes at a desired angular value $\varphi_{i1}$ and about the other of said two axes at a desired angular value $\varphi_{i2}$, the stabilisation aid comprises a computer (7) for determining, from the instantaneous angle of inclination $\alpha$ of a platform supporting the search unit with respect to an earth-fixed reference axis and the

4

instantaneous angular position B of the rotatable part about the search axis, measured in the plane of said platform, input signals $\varphi_{i1}+F_1(\alpha,B)$ and $\varphi_{i2}+F_2(\alpha,B)$ for, respectively, the first and the second servomechanism, where $F_1(\alpha,B)$ and $F_2(\alpha,B)$ are control signals for compensating the errors in, respectively, the first and the second servomechanism, the principal causes of which errors are the disturbing torques arising through the non-uniformity·in the search motion and the rotational velocity of each of the stators with respect to the rotors of the servomechanism motors effecting rotation of the observation means about said two axes ($S_1$ and $S_2$).

3. Stabilisation aid as claimed in claim 2, characterised in that the servomechanisms are constituted by a position feedback combination (5) of at least a servo amplifier and a motor.

4. Stabilisation aid as claimed in claim 3, characterised in that the computer (7) comprises a feedfoward circuit (9) for determining, from the angular values $\varphi_{11}$ and $\varphi_{12}$, said input signals for the servomechanisms.

5. Stabilisation aid as claimed in claim 4, characterised in that the feedforward circuit (9) comprises for each of the servomechanisms a velocity feedforward dependent upon the computer-calculated angular velocities $c_{v1}\cdot\dot{\varphi}_{11}$ and $c_{v2}\cdot\dot{\varphi}_{12}$, respectively, where $c_{v1}$ and $c_{v2}$ are dependent upon $\alpha$ and B.

6. Stabilisation aid as claimed in claim 5, characterised in that the feedforward circuit (9) comprises for each of the servomechanisms an acceleration feedforward dependent upon the computer-calculated angular accelerations $c_{a1}\cdot\ddot{\varphi}_{11}$ and $c_{a2}\cdot\ddot{\varphi}_{12}$, respectively, where $c_{a1}$ and $c_{a2}$ are dependent upon $\alpha$ and B.

7. Stabilisation aid as claimed in claim 3, characterised in that the computer (7) comprises means (8) for determining, from the instantaneous angle of inclination $\alpha$ and the instantaneous angular position B, the instantaneous values of $F_1(\alpha,B)$ and $F_2(\alpha,B)$, utilising an established relationship between $\alpha$ and B on the one side and $F_1(\alpha,B)$ and $F_2(\alpha,B)$ on the other side.

**Patentansprüche**

1. Stabilisierungsmittel für eine auf einem Wasser- oder Landfahrzeug angebrachte, mit einem um eine Suchachse (1) drehbaren Teil und hierauf montierten Wahrnehmungsmitteln (3) versehene Rundsucheinheit, welches Stabilisierungsmittel aus einem ersten und zweiten Servomechanismus besteht, zwecks Stabilisierung der um zwei senkrecht zueinander angeordneten Achsen ($S_1$, $S_2$) montierten Wahrnehmungsmittel (3), dadurch gekennzeichnet, daß die zwei Achsen hinsichtlich des drehbaren Teiles fixiert sind.

2. Stabilisierungsmittel gemäß Anspruch 1, dadurch gekennzeichnet, daß für die Stabilisierung rundum eine der erwähnten Achsen auf einen gewünschten Winkelwert $\varphi_{11}$ sowie für die Stabilisierung rundum eine der anderen Achsen auf einen gewünschten Winkelwert $\varphi_{12}$, ein Rechner (7) vorgesehen ist, zur Bestimmung anhand des momentanen Schrägstandwinkels $\alpha$ einer Plattform, auf der die Rundsucheinheit angebracht ist, mit Bezug auf eine gegenüber dem Erdhorizont fixierte Bezugsachse, sowie anhand der momentanen Winkelposition B des drehbaren Teiles hinsichtlich der Suchachse, gemessen in der Ebene der erwähnten Plattform, von Eingangssignalen $\varphi_{11}+F_1(\alpha,B)$ und $\varphi_{12}+F_2(\alpha,B)$ für den ersten bzw. zweiten Servomechanismus, wobei $F_1(\alpha,B)$ und $F_2(\alpha,B)$ Steuersignale darstellen, zwecks Kompensierung der Fehler in dem ersten bzw. zweiten Servomechanismus, welche Fehler hauptsächlich durch infolge der Ungleichförmigkeit in Suchbewegung und Rotationsgeschwindigkeit auftretende Stördrehmomente der einzelnen Statoren hinsichtlich der Rotoren der zu den betreffenden Servomechanismen gehörenden für die Rotation der Wahrnehmungsmittel um die zwei erwähnten Achsen ($S_1$ und $S_2$) vorgesehenen Antriebe hervorgerufen werden.

3. Stabilisierungsmittel gemäß Anspruch 2, dadurch gekennzeichnet, daß die Servomechanismen von einer positions-rückgekoppelten Kombination (5) von zumindest einem Servoverstärker und einem Antrieb gebildet werden.

4. Stabilisierungsmittel gemäß Anspruch 3, dadurch gekennzeichnet, daß der Rechner (7) aus einem Vorwärtskopplungsschaltkreis (9) besteht, mit dem Zweck, aus den Winkelwerten $\varphi_{11}$ und $\varphi_{12}$ die Eingangssignale für die Servomechanismen zu bestimmen.

5. Stabilisierungsmittel gemäß Anspruch 4, dadurch gekennzeichnet, daß der Vorwärtskopplungsschaltkreis (9) für jeden der Servomechanismen eine Geschwindigkeitsvorwärtskopplung umfaßt, welche von den vom Rechner bestimmten Winkelgeschwindigkeiten $c_{v1}\cdot\dot{\varphi}_{11}$ und $c_{v2}\cdot\dot{\varphi}_{12}$ abhängig ist, wobei $c_{v1}$ und $c_{v2}$ von $\alpha$ bzw. B abhängig sind.

6. Stabilisierungsmittel gemäß Anspruch 5, dadurch gekennzeichnet, daß der Vorwärtskopplungsschaltkreis (9) für jeden der Servomechanismen eine Beschleunigungsvorwärtskopplung umfaßt, welche von den vom Rechner bestimmten Winkelbeschleunigungen $c_{a1}\cdot\ddot{\varphi}_{11}$ und $c_{a2}\cdot\ddot{\varphi}_{12}$ abhängig ist, wobei $c_{a1}$ and $c_{a2}$ von $\alpha$ bzw. B abhängig sind.

7. Stabilisierungsmittel gemäß Anspruch 6, dadurch gekennzeichnet, daß der Rechner (7) Mittel (8) umfaßt, für die anhand des momentanen Schrägstandwinkels $\alpha$ und der momentanen Winkelposition B Bestimmung der momentanen Werte für $F_1(\alpha,B)$ und $F_2(\alpha,B)$, unter Verwendung einer festgestellten Beziehung zwischen $\alpha$ und B einerseits und $F_1(\alpha,B)$ und $F_2(\alpha,B)$ andererseits.

**Revendications**

1. Dispositif de stabilisation pour unité de recherche montée sur un véhicule ou sur un navire comportant une partie rotative montée de façon à pivoter sur un axe de recherche (1) et un moyen d'observation (3) monté sur ladite partie rotative, le dispositif de stabilisation comprenant un premier et un second servo-mécanismes disposés de façon à stabiliser le moyen (3) d'observation autour de deux axes ($S_1$ et $S_2$) perpendiculaires entre eux, caractérisé en ce que les deux axes sont fixes par rapport à ladite pièce rotative.

2. Dispositif de stabilisation comme revendiqué dans la revendication 1, caractérisé en ce qu'en vue d'obtenir la stabilisation autour de l'un desdits deux axes avec une valeur angulaire $\varphi_{I1}$ souhaitée et autour de l'autre desdits deux axes avec une valeur angulaire $\varphi_{I2}$ souhaitée, le dispositif de stabilisation comprend un ordinateur (7) destiné à déterminer, à partir de l'angle $\alpha$ d'inclinaison instantané $\alpha$ d'une plate-forme qui soutient l'unité de recherche par rapport à un axe de référence fixe par rapport à la terre et de la position angulaire instantanée B de la partie rotative sur l'axe de recherche, mesurée dans le plan de la plate-forme, des signaux d'entrée $\varphi_{I1}+F_1(\alpha,B)$ et $\varphi_{I2}+F_2(\alpha,B)$ destinés, respectivement au premier et au second servo-mécanismes, $F_1(\alpha,B)$ et $F_2(\alpha,B)$ étant des signaux de commande destinés à compenser les erreurs respectives du premier et du second servo-mécanisme, les principales causes de ces erreurs étant les couples perturbateurs qui se produisent en raison de la non-uniformité du mouvement de recherche et de la vitesse de rotation de chacun des stators par rapport aux rotors de servo-mécanisme qui réalisent la rotation du moyen d'observation autour desdits deux axes ($S_1$ et $S_2$).

3. Dispositif de stabilisation selon la revendication 2, caractérisé en ce que les servo-mécanismes sont constitués par une combinaison (5) de contre-réaction de position composée au moins d'un servo-amplificateur et d'un moteur.

4. Dispositif de stabilisation comme revendiqué dans la revendication 3, caractérisé en ce que l'ordinateur (7) comprend un circuit (9) à action prévisionnelle destiné à déterminer lesdits signaux d'entrée destinés aux servo-mécanismes à partir des valeurs angulaires $\varphi_{I1}$ et $\varphi_{I2}$.

5. Dispositif de stabilisation comme revendiqué dans la revendication 4, caractérisé en ce que le circuit (9) à action prévisionnelle comprend pour chacun des servo-mécanismes une action prévisionnelle de vitesse dépendant des vitesses angulaires respectives $c_{v1} \cdot \dot{\varphi}_{I1}$ et $c_{v2} \cdot \dot{\varphi}_{I2}$ calculées par l'ordinateur, $c_{v1}$ et $c_{v2}$ etant dépendantes de $\alpha$ et de B.

6. Dispositif de stabilisation comme revendiqué dans la revendication 5, caractérisé en ce que le circuit (9) à action prévisionnelle comprend pour chacun des servo-mécanismes une action prévisionnelle d'accélération dépendant des accélérations angulaires respectives $c_{a1} \cdot \ddot{\varphi}_{I1}$ et $c_{a2} \cdot \ddot{\varphi}_{I2}$, calculées par l'ordinateur, $c_{a1}$ et $c_{a2}$ étant dépendantes de $\alpha$ et de B.

7. Dispositif de stabilisation comme revendiqué dans la revendication 3, caractérisé en ce que l'ordinateur (7) comprend un moyen (8) destiné à déterminer, à partir de l'angle d'inclinaison instantané $\alpha$ et de la position angulaire instantanée B, les valeurs instantanées de $F_1(\alpha,B)$ et $F_2(\alpha,B)$, en utilisant une relation préétablie entre d'une part $\alpha$ et B et d'autre part.

**Fig. 1**

Fig. 2

0 107 232